# EUROPEAN PATENT APPLICATION

(11) **EP 1 734 631 A1**
(43) Date of publication of application: **20.12.2006**
(21) Application number: 05719220.5
(22) Date of filing: 17.02.2005
(51) Int. Cl.: H02G 15/24, H01B 12/02

(54) **SPLICE STRUCTURE OF SUPERCONDUCTING CABLE**

(30) Priority: 04.03.2004 JP 2004060757
(71) Applicant: Sumitomo Electric Industries, Ltd., Osaka-shi, Osaka 541-0041 (JP)
(72) Inventor: ASHIBE, Yuuichi, Osaka-shi, Osaka (JP); MASUDA, Takato, Osaka-shi, Osaka (JP)
(74) Representative: Kreutzer, Ulrich
(86) International application number: PCT/JP2005/002418
(87) International publication number: WO 2005/086307

(57) **Abstract**

Provided is a splice structure of a superconducting cable comprising: a joint box housing an end of a superconducting cable having a superconducting conductor; a coolant filled in the joint box so as to cool the end; and a pressure-adjusting part provided in the joint box and capable of adjusting the pressure by changing its shape according to a change of pressure in the joint box.

## Description

### Technical Field

The present invention relates to a splice structure of a superconducting cable having a conductor comprised of superconducting wires (hereinafter referred to as superconducting conductor) and a superconducting cable line including the splice structure. In particular, the present invention relates to a splice structure of a superconducting cable, in which when the pressure in a joint box is changed by an accident such as a short circuit, the change in the pressure can be reduced, and accordingly the possible breakdown of the joint box and the superconducting cable can be prevented.

### Background Art

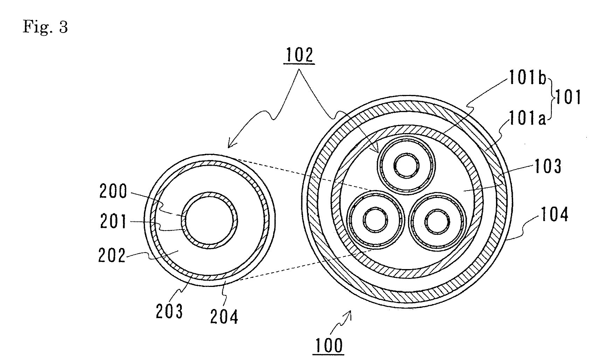

Hitherto, in the field of a superconducting cable including a superconducting conductor composed of, for example, Bi-based high-Tc superconducting tape wires, developments have been made with respect to not only a single-phase cable including a single cable core but also a multicore-in-one-type multiphase cable made by integrating a plurality of cable cores. Figure 3 is a cross-sectional view of a three-core-in-one-type three-phase superconducting cable. The same reference numerals in the figure indicate the same components. A superconducting cable 100 is structured such that three cable cores 102 are stranded together and placed in a thermal insulation pipe 101.

In the thermal insulation pipe 101, a heat insulator (not shown in the figure) is disposed between a double pipe composed of an outer pipe 101a and an inner pipe 101b, and the inside of the double pipe is evacuated so as to be in a vacuum state. Each of the cable cores 102 includes, from the center, a former 200, a superconducting conductor 201, an electrical insulation layer 202, a shielding layer 203, and a protective layer 204, in that order. A space 103 between the inner pipe 101b and the cable cores 102 serves as a coolant channel.

When a power cable line is constructed over a long distance, using the multiphase superconducting cables or the single-phase superconducting cables, a straight-through joint for connecting the superconducting cables to each other is constructed in the middle of the line, and a terminal joint for connecting the superconducting cable with the normal temperature side of the line is constructed at an end of the line. These joints usually include an end of the superconducting cable and a joint box for accommodating the end. The joint box is filled with a coolant such as liquid nitrogen in order to cool the end. The joint box also includes a thermal protection structure with a double vessel as in the cables. The joint box includes a coolant vessel filled with a coolant and provided inside the joint box, and a thermal insulation vessel provided outside the coolant vessel (see Patent Document 1).

Patent Document 1: Japanese Unexamined Patent Application Publication No. 2000-340274

### Disclosure of Invention

### Problems to be Solved by the Invention

However, the known splice structure has a problem in that a breakdown of the joint box or the superconducting cable may be caused by the occurrence of a short circuit accident or the like.

As described above, the superconducting cable is used while being cooled with a coolant such as liquid nitrogen. Therefore, an accident such as a short circuit may cause a so-called quench, that is, a phenomenon that the superconducting state cannot be maintained, resulting in transition into normal conduction, whereby heat is generated in the superconductors. The resultant increase in the temperature may explosively vaporize the liquid coolant such as liquid nitrogen, resulting in the breakdown of the superconducting cable and the joint box. For this reason, a superconducting cable line usually includes a shut-off switch that shuts off the conduction. When a short circuit or the like occurs, the heat generation is reduced by shutting off the conduction, thereby preventing the cable and the joint box from being damaged. However, since it takes some time, although very short, until the conduction is completely shut-off, the liquid coolant may be vaporized during the time. This vaporization may increase the pressure in the joint box, causing a breakdown in the superconducting cable and the joint box.

In order to adjust the pressure in the joint box when the liquid coolant is vaporized, the present inventors have investigated the feasibilities of providing a regulating valve in the joint box. However, the present inventors have found that the following problems occur since the regulating valve is to be provided covering the range between the coolant vessel and the thermal insulation vessel which are the components of the joint box: (1) the regulating valve may fail to achieve the function of adjusting the pressure when the moisture present around a part projecting from the thermal insulation vessel is frozen; (2) The ease of assembling the splice structure may be degraded; (3) The heat invasion into the coolant vessel may be increased; and (4) It is difficult to provide an anticorrosion layer on the outer periphery of the thermal insulation vessel.

(1) The regulating valve is cooled by the coolant existing in the coolant vessel since one end of the regulating valve is disposed in the coolant vessel and the other end is disposed in a manner protruding from the thermal insulation vessel. Consequently, when moisture existing in the air contacts the other end of the regulating valve projecting from the joint box (thermal insulation vessel), the moisture condenses into water droplets, which may be frozen. Likewise, in the case where the joint box is disposed at a place that is submerged in water in a manhole, the function of adjusting the pressure may not be satisfactorily achieved if the moisture that is in contact with the other end of the regulating valve is frozen.

(2) When a splice structure is constructed, the construction work is done usually in a state in which the coolant vessel and the thermal insulation vessel are separated to be shifted in order to facilitate the work of connecting superconducting cables together or connecting a superconducting cable with the normal temperature side of the line. However, when the regulating valve is provided, the coolant vessel and the thermal insulation vessel cannot be shifted since they are connected to each other at the position of the regulating valve. Consequently, there arise problems such as a degradation in the ease of assembling or an increase in the size of the splice structure.

(3) The coolant vessel and the thermal insulation vessel must be connected through, for example, a metal tube having a high thermal conductivity at the position of the regulating valve in the joint box. Consequently, because of the presence of the metal tube, the heat invasion from air may be increased.

(4) Although the joint box is composed of a material, such as a stainless steel, having excellent anticorrosion property and strength, an anticorrosion layer is generally provided on the outer periphery of the joint box in order to further increase the anticorrosion property. However, when the regulating valve is provided, it is difficult to provide the anticorrosion layer because a part projecting from the joint box is formed.

Accordingly, it is a main object of the present invention to provide a splice structure of a superconducting cable in which even when an accident such as a short circuit occurs, breakdown of the superconducting cable and a joint box can be more reliably prevented. It is another object of the present invention to provide a superconducting cable line including the splice structure.

### Means for Solving the Problems

According to the present invention, the above objects are achieved by providing a component in the joint box, the component being capable of adjusting the pressure in the joint box.

Namely, the splice structure of a superconducting cable of the present invention comprises a joint box housing an end of a superconducting cable having a superconducting conductor, a coolant filled in the joint box so as to cool the end, and a pressure-adjusting part provided in the joint box and capable of adjusting the pressure by changing its shape according to a change of pressure in the joint box.

According to the present invention, a pressure-adjusting mechanism is not provided in such a manner as cover the range from an inner vessel (coolant vessel) to an outer vessel (vacuum thermal insulation vessel), but it is provided in the joint box, in particular, in the inner vessel so as not to contact the outside (air or the like) of the joint box. Thus, when an accident occurs, breakdown of the superconducting cable and the joint box due to an increase in the pressure in the joint box is prevented and the above problems (1) to (4) are eliminated.

### Advantages of the Invention

According to the present invention having the above structure, when an accident such as a short circuit occurs, the pressure in the joint box can be adjusted. Accordingly, the present invention provides an advantage that the breakdown of the superconducting cable and the joint box due to an increase in the pressure can be prevented. In particular, in the present invention, a pressure-adjusting part is disposed in the joint box, and thus the joint box does not include a projecting part outside the box. Consequently, the present invention is advantageous in that not only a satisfactory adjusting function can be maintained, but also the heat invasion from the outside can be prevented, an excellent ease of assembling can be achieved, and an anticorrosion layer can be easily formed.

### Brief Description of the Drawings

Figure 1 is a schematic structural view showing a splice structure of a superconducting cable of the present invention in the case of a straight-through joint.
Figure 2 is a schematic structural view showing a splice structure of a superconducting cable of the present invention, in particular, showing a branched part in a termination.
Figure 3 is a cross-sectional view of a three-core-in-one-type three-phase superconducting cable.

### Reference Numerals

- 1: pressure-adjusting part
- 2: casing
- 2a: supply port
- 2b: fixing part
- 3: gas
- 10: straight-through joint box
- 11: coolant vessel
- 11A: tubular component
- 11B: end face plate
- 11a: fitting part
- 12: thermal insulation vessel
- 12A: tubular component
- 12B: end face plate
- 12a: supporting jig
- 12b: fixture
- 12c: ring component
- 20: solid insulating component
- 21: projecting part
- 22: reinforcing layer
- 30: metal flange
- 31: pressing flange
- 32: fixing attachment
- 40: straight-through joint component
- 41: sleeve part
- 50: shield-connection part
- 51: cylindrical component
- 52: connecting component
- 60: splitter box
- 70: thermal insulation pipe
- 71: terminal part
- 100: three-phase superconducting cable
- 101: thermal insulation pipe
- 101a: outer pipe
- 101b: inner pipe
- 102: cable core
- 103: space
- 104: anticorrosion layer
- 110a to 110c: holder
- 110d: semicircular arc-shaped component
- 120: coolant
- 200: former
- 201: superconducting conductor
- 202: electrical insulation layer
- 203: shielding layer
- 204: protective layer

### Best Mode for Carrying Out the Invention

The present invention will now be described in more detail.
The present invention is applied to a superconducting cable having a superconducting conductor. The superconducting cable may be a single-phase superconducting cable including a single cable core having the superconducting conductor or a multiphase superconducting cable including a plurality of cable cores. The multiphase superconducting cable is, for example, a three-core-in-one-type three-phase superconducting cable in which three cable cores stranded together are placed in a thermal insulation pipe.

The superconducting conductor may be formed by, for example, spirally winding, in a single-layer or multilayer structure, wires composed of a Bi2223-based superconducting material. When the superconducting conductor has a multilayer structure, a layer insulation film may be provided. For example, the layer insulation film is formed by winding insulating paper such as Kraft paper or semisynthetic insulating paper such as polypropylene-laminated paper (PPLP: registered trademark, manufactured by Sumitomo Electric Industries, Ltd.). An electrical insulation layer is formed by winding semisynthetic insulating paper such as PPLP (registered trademark) on the outer periphery of the superconducting conductor. A shielding layer having the same structure as that of the superconducting conductor may be provided on the outer periphery of the electrical insulation layer.

The present invention can be applied to both of the connection structures of superconducting cables: a straight-through joint structure for connecting superconducting conductors in a pair of cables to each other, and a termination structure for connecting the superconducting conductor and a normal temperature side of the cable line. In any of the connections, an end of the superconducting cable is placed in a joint box. In the case of the straight-through joint, for connecting single-phase cables, the conductor-connection part at which the superconducting conductors are connected to each other at the ends of the cables is preferably placed in a straight-through joint box. In the case of connecting multiphase cables, each of the conductor-connection parts corresponding to the respective phase may be placed in an individual straight-through joint box, or the conductor-connection parts of all phases may be placed altogether in a single straight-through joint box. In the case where the straight-through joint is separately made for each phase, the connection is done after splitting the cable into individual phases; therefore, a splitter box for containing the split parts and a straight-through joint box for containing the connected parts of the superconducting conductors may be provided as a joint box. In the case of the termination, in the single-phase cable, a terminal connection part where the superconducting conductor and the normal temperature side of the line are connected is preferably placed in a terminal joint box. In the multiphase cable, usually the connection to the normal temperature side of the line is done after splitting the cable into individual phases, and therefore a splitter box for containing the split parts and a terminal joint box for housing the terminal connection part connected to the normal temperature side of the line may be provided as a joint box. In the present invention, the splitter box is also included in a termination splice box.

In the case of a straight-through joint, the structure of the conductor-connection part comprises the end of each superconducting conductor exposed from an end of a pair of superconducting cables and a joint component that is composed of a conductive material and that connects the pair of superconducting conductors. The joint component may be a sleeve in which a pair of superconducting conductors are inserted. Alternatively, the joint component may comprise a straight-through joint component and sleeves for connecting the superconducting conductors to each other through the straight-through joint component provided therebetween. On the outer periphery of the conductor-connection part, preferably, a solid insulating component such as an epoxy unit is provided or a reinforcing layer composed of an insulating material such as Kraft paper or PPLP (registered trademark) is provided so as to reinforce the insulation. The solid insulating component may be fixed to the joint box. This structure can prevent the connected position of the superconducting conductors in the joint box from being shifted due to a thermal shrinkage of the cable cores.

In the case of termination, the structure of the conductor-connection part comprises a superconducting conductor exposed from an end of a superconducting cable and a lead part made of a normal-conduction material for connecting the superconducting conductor and the normal temperature side of the line.

Preferably, the joint box is structured such that a state of cryogenic temperature can be maintained, and is filled with a coolant for cooling an end of the superconducting cable. For example, the joint box has a double vessel structure including a coolant vessel filled with a coolant and a thermal insulation vessel provided on the outer periphery of the coolant vessel. For example, the same coolant as that used for cooling the cable part, such as liquid nitrogen, may be used as the coolant. The thermal insulation vessel may have a thermal insulation function afforded by evacuation or the like. A heat insulation material may also be disposed therein. The joint box is preferably composed of a durable metal such as a stainless steel. The joint box preferably has a cylindrical shape so that a turbulent flow of the pressurized coolant in the joint box can be suppressed.

In the case of the straight-through joint in particular, preferably the joint box is structured such that it can be formed into an integrated unit by combining the pieces that are divided in the longitudinal direction of cables.
In this case, the connecting work can be easily performed even at a place where the installation space is limited, for example, in a manhole. Specifically, for example, a joint box including a pair of half pieces made by dividing into two pieces in the longitudinal direction of cables may be used. In this case, one of the half pieces is withdrawn toward the root side (i.e., the far side from the connecting end) of one of the cables to be connected, and another half piece is withdrawn toward a core of the root side of the other cable. Consequently, the connecting ends of both cable cores to be connected are exposed, the connecting work can be easily performed. After the superconducting conductors are connected to each other, both of the withdrawn half pieces are moved to the sides of the connected ends of the superconducting conductors, and then connected together by welding or the like to form an integrated joint box.

In the case of a straight-through joint of multiphase cables, a plurality of conductor-connection parts are present since the conductor-connection part is formed in each phase. In this case, joint boxes may be separately prepared for the individual phases. However, preferably the conductor-connection parts are placed in a single joint box so that the size of the splice structure can be reduced, which allows a small installation space, thereby allowing a satisfactory installation in a manhole or the like. If the straight-through joint boxes are provided for the individual phases, the ease of assembling is not satisfactory because the same work must be repeated several times. In contrast, if the conductor-connection parts are placed in a single joint box, the working efficiency can be increased because the work is performed only once.

In the present invention, a pressure-adjusting part whose shape is changeable according to a change of the pressure in the joint box so as to adjust the pressure in the box is provided in the joint box. In particular, it is preferable that the pressure-adjusting part be able to reduce the change when the pressure in the joint box is drastically changed as a result of a liquid coolant in the joint box being vaporized by a short circuit accident or the like. The pressure-adjusting part has, for example, a structure including a casing that can expand and shrink, or at least shrink, according to a change in pressure, which casing contains a gas that does not become a liquid state at the temperature of a coolant filled in the joint box. The casing is preferably composed of a material, such as a stainless steel or other metals, having an excellent strength even at cryogenic temperatures of a coolant, such as liquid nitrogen, filling the joint box. For example, a bellows pipe may be adopted as a expandable and shrinkable form of the casing. As described above, when liquid coolant in the joint box is vaporized, the pressure in the box is drastically increased. Therefore, it is desirable to reduce the change in the pressure instantaneously. Accordingly, the casing that is capable of instantaneously shrinking is preferable in order to reduce the change in the pressure within a very short time. For example, when a bellows pipe is used, the amount of reduction in the pressure can be changed by appropriately changing the wall thickness, length, or irregularity height of the bellows pipe. Also, a suitable direction of arranging the casing may be selected. For example, for adjusting the pressure in an accident that occurs at a cable part more distant from the joint box, the casing may be arranged in the joint box so that the direction of the expansion and shrinkage of the casing is equivalent to the longitudinal direction of the superconducting cable. When an accident, such as a quench, occurs at a cable part, the temperature is increased from the accident part in the longitudinal direction of the cable, i.e., the direction of electrical conduction. Accordingly, when the direction of the expansion and shrinkage of the casing is set in the longitudinal direction of the cable, i.e., the direction of electrical conduction, it is easy to cope with the change in the pressure. On the other hand, when the pressure is adjusted in an accident that occurs in the joint box, the casing may be arranged in the joint box so that the direction of the expansion and shrinkage of the casing corresponds to the radial direction of the superconducting cable. When an accident, such as a quench, occurs at a connection part where superconducting conductors in the joint box are connected to each other or a connection part where a superconducting conductor is connected to the normal temperature side of the cable line, the temperature is increased from the accident part in the radial direction of the cable. Accordingly, when the direction of the expansion and shrinkage of the casing corresponds to the radial direction of the cable, it is easy to cope with the change in the pressure. The gas to be charged in the casing is, for example, helium or hydrogen. The gas thus charged is adjusted to the same pressure as the pressure in the joint box.

Embodiments of the present invention will now be described with reference to the drawings. The ratios of dimensions in the drawings do not necessarily correspond to those in the description.

### Example 1

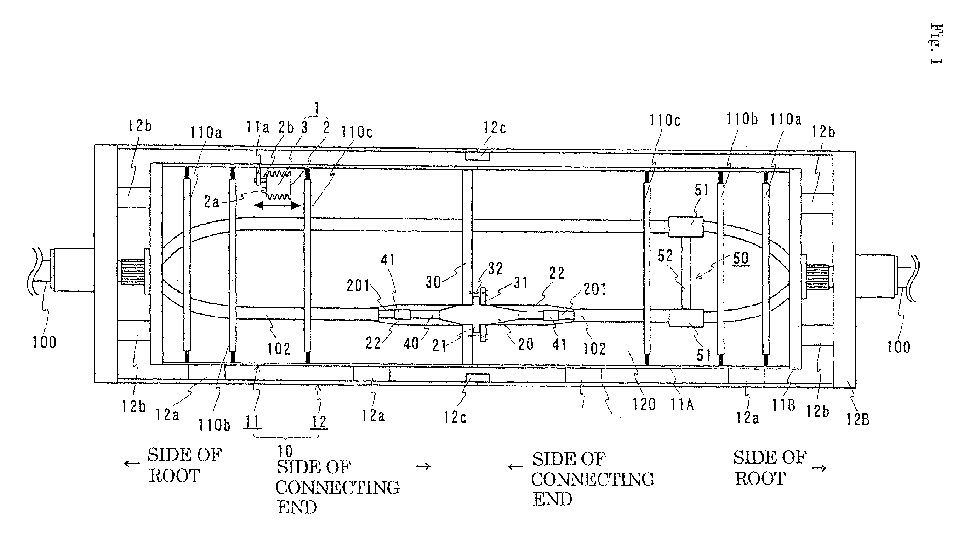

Figure 1 is a schematic structural view showing a splice structure of a superconducting cable of the present invention. The splice structure described in this embodiment is a straight-through joint of a multiphase superconducting cable including a plurality of cable cores 102 each having a superconducting conductor. This splice structure includes a straight-through joint box 10 in which ends of superconducting cables 100 are placed, a coolant 120 filled in the box 10 so as to cool the ends, and a pressure-adjusting part 1 provided in the box 10 and capable of adjusting the pressure in the box 10.

### Each structure will be described in detail hereinafter.

### (Superconducting cable)

This embodiment shows a three-core-in-one-type three-phase superconducting cable 100 including three cable cores 102. In Fig. 1, since the superconducting cable 100 is viewed from a side face, only two cable cores are shown. However, when viewed from a front face direction, the superconducting cable 100 includes three cable cores. The superconducting cable 100 has the same structure as that shown in Fig. 3. Specifically, the superconducting cable 100 has a structure in which three cable cores 102 are stranded together to be placed in a thermal insulation pipe. Each of the cable cores 102 includes, from the center, a former, a superconducting conductor, an electrical insulation layer, a shielding layer, and a protective layer, in that order. The former was prepared by stranding a plurality of copper wires each having a insulating coating. The superconducting conductor and the shielding layer are each formed by spirally winding Bi2223-based superconducting tape wires (Ag-Mn sheathed wires) in a multilayer on the outer periphery of the former and on the outer periphery of the electrical insulation layer, respectively. The electrical insulation layer was formed by winding semisynthetic insulating paper (PPLP: registered trademark, manufactured by Sumitomo Electric Industries, Ltd.) on the outer periphery of the superconducting conductor. The protective layer was formed by winding Kraft paper on the outer periphery of the shielding layer. The thermal insulation pipe was made in a multilayered heat insulation structure composed of outer and inner pipes made of stainless steel corrugated tubes, wherein heat insulators were provided in multiple layers in the space between the outer and inner pipes, which space was evacuated. A coolant such as liquid nitrogen was flowed in a space between the inner pipe and each cable core 102. A protective layer composed of polyvinyl chloride was provided on the outer periphery of the thermal insulation pipe.

### (Straight-through joint box)

Ends of the superconducting cables 100 are introduced into the straight-through joint box 10 and connected to each other. In Example 1, a straight-through joint box 10 houses three conductor-connection parts for connecting superconducting conductors 201 of the cable cores 102 for the individual phases led out from a pair of three-phase superconducting cables 100. The straight-through joint box 10 has a double vessel structure including a coolant vessel 11 which is filled with the coolant 120 and in which the ends (conductor-connection parts) of the cables are placed, and a thermal insulation vessel 12 that accommodates the coolant vessel 11. In Example 1, the coolant vessel 11 and the thermal insulation vessel 12 were structured such that half pieces separable in the longitudinal direction of cable cores 102 were combined together to form an integrated unit. In a case where the installation location is a manhole, for example, the manhole generally has dimensions of about 5 to 6 m in length, 5 to 6 m in width, and 2 m in height, whereas the joint box 10 has a length of about 4 m. Therefore, if the joint box has an inseparable integrated structure, it will be difficult to introduce the joint box into the manhole and also the connecting work will be difficult to perform in the manhole. It is desirable that the conductor-connection part be disposed near the center of the joint box. However, if an integrally formed joint box is withdrawn toward the root side of one of the cables 100 in order to perform the connection work of the superconducting conductors, a large space is required for such withdrawal of the joint box, and in addition, the conductor-connection part is formed at the side opposite to the side to which the joint box is withdrawn. Therefore, if the joint box is moved to the side of the conductor-connection part after the connection work, the conductor-connection part will possibly be disposed in an one-sided manner on the side at which the connection work is performed in the joint box. In contrast, if the joint box is structured such that half pieces that are separable in the longitudinal direction of cable cores 102 are combined, the dimension of each half piece is about 2 m. Consequently, not only can the joint box be easily introduced into the manhole, but also the space required for the withdrawal of the joint box can be reduced. Furthermore, since each of the half pieces is withdrawn toward the respective root side of the cables 100 to be connected together, the conductor-connection part can be easily disposed near the center of the straight-through joint box 10 after forming the conductor-connection part. The shape of the straight-through joint box 10 in Example 1 was designed to be cylindrical so as to suppress the pressure loss caused by the circulation of the pressurized coolant.

### <Coolant vessel>

Liquid coolant such as liquid nitrogen fills the coolant vessel 11 in order to cool the conductor-connection parts. The coolant vessel 11 in Example 1 was composed of a stainless steel. Each of the half pieces constituting the coolant vessel 11 includes a tubular component 11A both ends of which are open and an end face plate 11B attached to an end of the tubular component 11A. By attaching the end face plate 11B to an end of the tubular component 11A and connecting the open other ends of the tubular components 11A to each other, a closed space shown in Fig. 1 is formed. The tubular components 11A are connected to each other by, for example, welding.

### <Thermal insulation vessel>

The coolant vessel 11 is placed in the thermal insulation vessel 12. In Example 1, the thermal insulation vessel 12 was composed of a stainless steel. In this embodiment, the thermal insulation is achieved by evacuating the space between the coolant vessel 11 and the thermal insulation vessel 12. Each of the half pieces constituting the thermal insulation vessel 12 includes a tubular component 12A both ends of which are open and an end face plate 12B attached to an end of the tubular component 12A. By attaching the end face plate 12B to an end of the tubular component 12A and connecting the open other ends of the tubular components 12A to each other, a closed space shown in Fig. 1 is formed. The tubular components 12A are connected to each other by, for example, welding. In this embodiment, a ring component 12c is provided on the inner periphery of the tubular components 12A so that the tubular components 12A are easily connected to each other. In addition, supporting jigs 12a for supporting the weight of the coolant vessel 11, and fixtures 12b for fixing the position of the coolant vessel 11 in the longitudinal direction of the thermal insulation vessel 12 are provided in the thermal insulation vessel 12. Each of the supporting jigs 12a, which is of an arc shape along the outer periphery of the tubular component 11A of the coolant vessel 11 and the inner periphery of the tubular component 12A of the thermal insulation vessel 12, was formed with a stainless steel material having excellent strength. The fixtures 12b having a ring-shape and a size capable of contacting with the end face plate 11B of the coolant vessel 11 were made using a fiber reinforced plastic (FRP) material that does not easily conduct heat.

### (Pressure-adjusting part)

In the present invention, the pressure-adjusting part 1 is provided in the coolant vessel 11. In this embodiment, the pressure-adjusting part 1 includes a casing 2 that can expand and shrink according to a change in the pressure in the coolant vessel 11, and a gas 3 that is included in the casing 2 and that is not in a liquid state at the temperature of the coolant 120 filling the coolant vessel 11. A stainless steel bellows pipe was used as the casing 2. The bellows pipe has preferably a wall thickness, irregularity size, and length which are adjusted for use so that the bellows pipe can shrink (i.e., change the shape thereof) in accordance with a pressure change that occurs within a very short time. That is, the margin of expansion and shrinkage of the bellows pipe corresponds to the possible range for the pressure adjustment. Stainless steel plates were attached to openings of the bellows pipe by welding to form a structure allowing the gas 3 to be charged in the bellows pipe. A supply port 2a for introducing the gas 3 and a fixing part 2b for fixing the bellows pipe in the coolant vessel 11 are provided on one of the plates. A fitting part 11a for fitting the fixing part 2b is provided in the coolant vessel 11. The fixing part 2b is fixed to the fitting part 11a with an attachment such as a bolt, thereby fixing the pressure-adjusting part 1 in the coolant vessel 11. In Example 1, the casing 2 was attached such that the direction of expanding/shrinking of the casing 2 (the direction shown by an arrow in Fig. 1) was the same with the longitudinal direction of the superconducting cable (the horizontal direction in Fig. 1). According to this arrangement, the pressure-adjusting part 1 can easily shrink, and the shape of the pressure-adjusting part 1 can change more rapidly at the time of the pressure change when an accident such as a quench occurs at a cable part distant from the straight-through joint box 10, for example. Helium gas was used as the gas 3. When the gas 3 is charged in the casing 2, the pressure in the casing 2 is adjusted to be the same as the pressure of the coolant 120, and the casing 2 is hermetically sealed.

With the above structure, even if an accident such as a short circuit occurs, thereby generating heat in the superconducting conductors, which results in causing the surrounding coolant to be vaporized, causing an increase of the pressure in the straight-through joint box 10, the increase of the pressure can be reduced by shrinkage of the pressure-adjusting part 1, and accordingly the pressure in the box 10 can be reduced. Therefore, the breakdown of the superconducting cable and the straight-through joint box 10 caused by the increase in the pressure can be effectively prevented. In the present invention, particularly, the structure in which the pressure-adjusting part 1 is disposed in the straight-through joint box 10 without projecting from the box 10 is advantageous, as compared with the structure in which the pressure-adjusting part projects from the box, as follows: the function of adjusting the pressure can be satisfactorily maintained; the ease of assembling is satisfactory; even when the pressure-adjusting part is provided, the heat invasion from the outside is not increased; and an anticorrosion layer can be easily provided on the outer periphery of the box.

Other structures of the splice structure shown in Fig. 1 will now be described.
(Holder)
The superconducting cable 100 is put into the thermal insulation pipe in a state in which the cable cores 102 are stranded together, and at the end that is introduced into the straight-through joint box 10, the cable cores 102 are split in a manner such that the intervals between the cable cores 102 are widened more as the position is more distal from the root side thereof and more proximate toward the connecting end side so that each cable core 102 can be separately easily handled. In Example 1, in each cable 100, a first holder 110a is provided at the root side position, a third holder 110c is provided at the connecting end side position, and a second holder 110b is provided at an intermediate position, along the longitudinal direction of the cable cores 102 (the horizontal direction in Fig. 1). Semicircular arc-shaped components (not shown) are provided between the first holder 110a and the second holder 110b so as to hold the cable cores 102 and to connect the first holder 110a with the second holder 110b. The third holder 110c is not connected to the other holder 110a or 110b. At the center of the first holder 110a, an annular part is provided, and three semicircular arc-shaped components are fixed on the outer periphery of the annular part. The first holder 110a is disposed such that the center of the annular part is located substantially at the center of the space surrounded by the three cable cores 102 so that the intervals of the cable cores 102 are widened. The fundamental structures of the second holder 110b and the third holder 110c are substantially the same as the structure of the first holder 110a and differ from that of the first holder 110a in that the diameter of the annular part is larger than that of the first holder 110a. Each of the holders 110a to 110c includes a sliding part that is substantially in point contact with the inner periphery of the joint box 10 so that the holders 110a to 110c can move in the joint box 10 according to the expansion and shrinkage of the cable cores 102. The sliding part is disposed at a position, where the semicircular arc-shaped component is not fixed, on the outer periphery of the annular part. n Example 1, the holders can move in the straight-through joint box 10; however, the holders may be fixed in the box 10 instead.

### (Conductor-connection part)

In this embodiment, a solid insulating component 20 is provided on the outer periphery of each conductor-connection part. The solid insulating component 20 is fixed to the joint box 10 with a metal flange 30. The conductor-connection part includes the ends of the superconducting conductors 201 exposed from the cable cores 102 of the individual phases, a straight-through joint component 40 provided between the ends so as to connect the ends, and sleeves 41 for connecting the end of the superconducting conductor 201 to the straight-through joint component 40. The straight-through joint component 40 and the sleeve parts 41 are composed of a conductive material, such as copper or aluminum, which has excellent strength even at the temperature of the coolant 120. In Fig. 1, although the conductor-connection part is shown only in the lower cable core 102, the same conductor-connection parts are provided also in the other two cable cores.

### <Solid insulating component>

The solid insulating component 20 composed of an epoxy resin is provided on the outer periphery of the straight-through joint component 40. A ring-shaped projecting part 21 is integrally formed in the circumferential direction on the solid insulating component 20 so that the solid insulating component 20 is easily fixed to the metal flange 30. The solid insulating component 20 is fixed to the metal flange 30 with fixing attachments 32.

### <Reinforcing layer>

As shown in Fig. 1, a reinforcing layer 22 for reinforcing the insulation performance is provided on the outer periphery of the conductor-connection part. In Example 1, the reinforcing layer 22 was formed by winding a kraft paper.

### <Metal flange>

The solid insulating component 20 is fixed to the joint box 10 (coolant vessel 11) with the metal flange 30. In this embodiment, the metal flange 30 is of a disc shape fitted to the shape of the joint box 10 (coolant vessel 11) and is fixed to the coolant vessel 11 by welding. The solid insulating component 20 is inserted into each of three fixing holes provided in the flat surface of the metal flange 30. The projecting part 21 is pressed with a pressing flange 31 and the solid insulating component 20 is fixed to the metal flange 30 with the fixing attachments 32. In addition, a coolant circulation hole may be provided in the metal flange 30 so that the coolant 120 can circulate through the metal flange 30. The metal flange 30 and the pressing flange 31 were composed of a stainless steel (SUS 304) having excellent strength.

Thus, by fixing the solid insulating component 20 to the metal flange 30 fixed to the coolant vessel 11, it is possible to prevent the conductor-connection part from moving in the longitudinal direction of the cable core 102 even if the cable core 102 shrinks as a result of being cooled by the coolant. Furthermore, since the position of the superconducting conductors in the straight-through joint box 10 can be determined by fixing the solid insulating component 20, for example, a shift in the position during installation can be prevented. Therefore, according to this structure, the position of the conductor-connection part can be held at a desired position (for example, a designed position).

### (Treatment of shielding layer)

In the present embodiment, the shielding layers of the cable cores 102 extending from the superconducting cables 100 are connected at a shield-connection part 50 to form a short circuit. In this structure, a leaked magnetic field is not easily generated outside the cable cores 100.

The shield-connection part 50 shown in Example 1 is a structure made by combining cylindrical components 51 provided on the outer periphery of the shielding layer of the cable cores and a connecting component 52 for connecting the cylindrical components 51 with each other. In Example 1, the shield-connection part 50 was made of copper. In particular, since the connecting component 52 is composed of a flexible braided material, not only can the cylindrical components 51 be easily connected to the connecting component 52 even in a limited space, such as a space in the straight-through joint box 10, but also a shift in the dimensions generated during the assembling process can be absorbed. In Example 1, the shielding layer 203 and the cylindrical component 51 were connected with a solder having low melting point. Specifically, the solder had a melting point of about 78°C (chemical composition; Sn: 17 mass percent, Bi: 57 mass percent, In: 26 mass percent).

In this embodiment, a normal-conduction material was used as the material of the shield-connection part; however, a superconducting material may be used instead. For example, the cylindrical components may be composed of copper and the connecting component may be composed of a superconducting material. Specifically, a plurality of round wires produced by a power-in-tube method may be prepared and the cylindrical components may be connected to each other with the round wires. In Example 1, one shield-connection part is provided in the joint box 10; however, two shield-connection parts may be provided instead, arranging one at each cable side, or otherwise no shield-connection part may be provided.

In the case of providing the above-mentioned shield-connection part, it is preferable to provide the shield-connection part for connecting the shielding layer of one cable to the shielding layer of the other cable. The shield-connection part is preferably composed of a copper braided material. For example, the shield-connection part is disposed from the shielding layer of one cable to the shielding layer of the other cable, with the reinforcing layer 22 and the solid insulating component 20 provided therebetween. The shield-connection part is connected to each of the shielding layers with solder. The shield-connection part may also be composed of a normal-conducting material or a superconducting material.

### Example 2

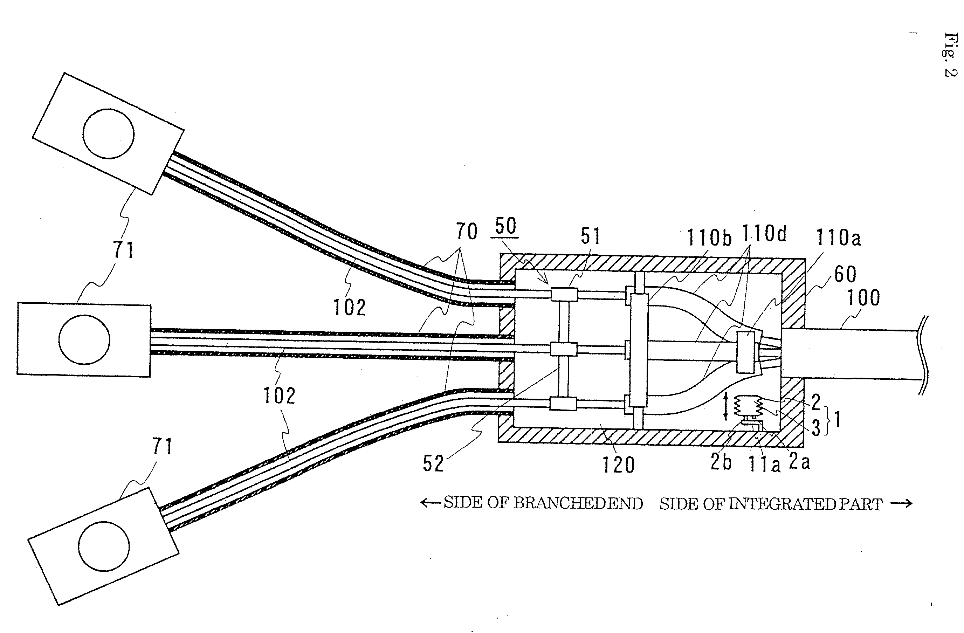

In Example 1, a straight-through joint has been described; the present invention may also be applied to a terminal joint. Figure 2 is a schematic structural view showing a splice structure of the present invention, particularly shows a branched part in a termination of a superconducting cable. The fundamental structure of this splice structure is the same as that of Example 1 except that the joint box is replaced with a splitter box 60 in which the individual phases of the superconducting cable 100 are held in an expanded manner. Specifically, this splice structure comprises a splitter box 60 for housing the branched part of the superconducting cable 100, a coolant 120 filling the splitter box 60 so as to cool the branched part, and a pressure-adjusting part 1 provided in the splitter box 60 and capable of adjusting the pressure by changing its shape in accordance with a change in the pressure in the splitter box 60.

This structure provides advantages similar to those of Example 1. That is, even if an accident such as a short circuit occurs, whereby the coolant 120 is vaporized, causing an increase of the pressure in the splitter box 60, the increase can be reduced by shrinkage of the pressure-adjusting part 1, and accordingly the pressure in the splitter box 60 can be reduced. Therefore, the breakdown of the superconducting cable and the splitter box 60 can be prevented.

Other structures of the splice structure shown in Fig. 2 will now be described.
The splitter box 60 has a double vessel structure including a coolant vessel and a thermal insulation vessel as in the straight-through joint box 10. The space between the coolant vessel and the thermal insulation vessel is evacuated. A superconducting cable 100 introduced into the splitter box 60 is held by a holder in a state in which the intervals between cable cores 102 are widened. There are arranged, in a longitudinal direction of the cable cores 102 (the horizontal direction in Fig. 2), a first holder 110a and a second holder 110b, provided at the cable root side and at the connecting end side respectively, and semicircular arc-shaped components 110d provided between the first holder 110a and second holder 110b. The treatment of the shielding layer at a shield-connection part 50 is done as in Example 1. A thermal insulation pipe 70 made of a corrugated stainless steel double pipe, in which the coolant 120 is filled, is provided so as to cover the outer periphery of each cable core 102 extending from the splitter box 60. A terminal part 71 that can be connected to other equipment or device is provided at the end of each cable core 102.

In Example 2, the pressure-adjusting part 1 was provided in the splitter box 60; however, the pressure-adjusting part 1 may be disposed in a terminal box instead. In Example 2, the casing 2 is attached to the splitter box 60 in a manner such that the expanding/shrinking direction of the pressure-adjusting part 1 (the direction shown by an arrow in Fig. 2) is equivalent to the radial direction of the cable. According to this arrangement, if an accident such as a quench occurs in the splitter box 60, for example, the pressure-adjusting part 1 can easily shrink, allowing the shape of the pressure-adjusting part 1 to change more rapidly at the time of the pressure change. Alternatively, the casing 2 may be arranged such that the expanding/shrinking direction of the pressure-adjusting part 1 is equivalent to the longitudinal direction of the cable as in Example 1.

### Industrial Applicability

The splice structure of the present invention is suitable for constructing a straight-through joint or a termination of superconducting cables. Furthermore, the present invention is suitable for constructing a superconducting cable line including such a splice structure.

## Claims

1. A splice structure of a superconducting cable comprising:
a joint box housing an end of a superconducting cable having a superconducting conductor,
a coolant filled in the joint box so as to cool the end, and a pressure-adjusting part provided in the joint box and capable of adjusting the pressure by changing its shape according to a change of pressure in the joint box.

2. A splice structure of a superconducting cable according to claim 1, wherein the pressure-adjusting part includes:
a casing capable of expanding or shrinking according to a change in the pressure and
a gas included in the casing, the gas not becoming a liquid state at the temperature of the coolant in the joint box.

3. A splice structure of a superconducting cable according to claim 2, wherein the casing is arranged in the joint box such that the expanding/shrinking direction of the casing is equivalent to the longitudinal direction of the superconducting cable.

4. A splice structure of a superconducting cable according to claim 2, wherein the casing is arranged in the joint box such that the expanding/shrinking direction of the casing is equivalent to the longitudinal direction of the superconducting cable.

5. A superconducting cable line comprising the splice structure of a superconducting cable according to any one of claims 1 to 4.
